# EUROPÄISCHE PATENTANMELDUNG

(11) **EP 3 716 442 A1**
(43) Veröffentlichungstag der Anmeldung: **30.09.2020**
(21) Anmeldenummer: 19164887.2
(22) Anmeldetag: 25.03.2019
(51) Int. Cl.: H02J 13/00, G06F 17/00, G06F 9/00, G06F 12/00, H02J 3/00

(54) **EINRICHTUNG, SYSTEM UND VERFAHREN ZUM BETRIEB EINES ELEKTRISCHEN ENERGIEVERSORGUNGSNETZES**

(71) Anmelder: Siemens Aktiengesellschaft, 80333 München (DE)
(72) Erfinder: Kirkman, Robert, 90518 Altdorf (DE)

(57) **Zusammenfassung**

Die Erfindung betrifft eine Einrichtung (13) zum Betreiben eines Energieversorgungsnetzes (10) mit einer Prozessoreinrichtung (21), einer Datenspeichereinrichtung (22) und einer Kommunikationseinrichtung (23), die untereinander über einen Datenbus (25) verbunden sind, wobei die Einrichtung (13) dazu ausgebildet ist, Messwerte von Messeinrichtungen zu empfangen und Steuersignale an Aktoreinrichtungen zu senden.

Um den Betrieb eines Energieversorgungsnetzes noch zuverlässiger auszugestalten, wird vorgeschlagen, dass die Einrichtung (13) dazu eingerichtet ist, mit der Prozessoreinrichtung (21) Programmanweisungen von Software-Applikationen (14) auszuführen, die in der Datenspeichereinrichtung (22) abgespeichert sind und bei deren Ausführung die Messwerte verarbeitet und die Steuersignale zur Beeinflussung der Aktoreinrichtungen erzeugt werden, wobei die Datenspeichereinrichtung (22) datentechnisch voneinander separierte Speicherbereiche (22an) aufweist, die zur Abspeicherung der Software-Applikationen (14) dienen, wobei in jedem Speicherbereich (22a-n) genau eine Software-Applikation (14) abgespeichert werden kann, und wobei die Prozessoreinrichtung (21) voneinander separierte und unabhängig voneinander arbeitende Prozessorbereiche (21an) aufweist, die zur Ausführung der Programmanweisungen eingerichtet sind, wobei in jedem Prozessorbereich (21a-n) Programmanweisungen genau einer der Software-Applikationen (14) ausgeführt werden können.

Die Erfindung betrifft auch ein System und ein Verfahren zum Betreiben eines Energieversorgungsnetzes.

## Beschreibung

Die Erfindung bezieht sich auf eine Einrichtung zum Betrieb eines elektrischen Energieversorgungsnetzes mit einer Prozessoreinrichtung, einer Datenspeichereinrichtung und einer Kommunikationseinrichtung, wobei die Prozessoreinrichtung, die Datenspeichereinrichtung und die Kommunikationseinrichtung untereinander über einen internen Datenbus verbunden sind und wobei die Einrichtung dazu ausgebildet ist, über die Kommunikationseinrichtung digitalisierte Messwerte von Messeinrichtungen, die im Bereich des elektrischen Energieversorgungsnetzes angeordnet sind, zu empfangen und digitale Steuersignale an Aktoreinrichtungen, die im Bereich des elektrischen Energieversorgungsnetzes angeordnet sind, zu senden.

Die Erfindung betrifft auch ein System mit einer solchen Einrichtung und einem Cloudcomputingsystem sowie ein Verfahren zum Betreiben eines elektrischen Energieversorgungsnetzes unter Nutzung einer solchen Einrichtung.

Es ist bekannt, zum Betreiben eines elektrischen Energieversorgungsnetzes mit mehreren Stationen (auch als "Schaltstationen", "Transformatorstationen" oder "Unterstationen" bezeichnet) auf Nieder-, Mittel- und Hochspanungsebene eine hohe Anzahl verschiedenster Automatisierungsgeräte (z.B. Schutz-, Power Quality-, Mess- und Steuergeräte, Sensoren etc.) einzusetzen, wobei die Automatisierungsgeräte von einem oder von mehreren Herstellern stammen können. Eine Station umfasst dabei üblicherweise hierarchisch angeordnete Automatisierungsgeräte, die auf die Durchführung ihrer jeweiligen Aufgabe spezialisiert sind. Beispielsweise sind elektrische Schutzgeräte über eine Direktverdrahtung mit Sensoren an Messstellen des Energieversorgungsnetzes verbunden und führen Funktionen zur Überwachung und zum Schutz des Netzes durch.

Daneben existieren weitere Geräte, z.B. Power-Quality-Geräte, Fehlerschreiber und spezielle Messgeräte. Hierarchisch übergeordnete Leitstellengeräte empfangen Informationen über den Zustand des Netzes von den untergeordneten Geräten, verarbeiten diese und bereiten sie ggf. zur Anzeige auf einer Anzeigeeinrichtung einer lokalen Leitstelle oder in einer übergeordneten Netzleitstelle auf. Die gesamte Funktionalität einer Station wird dezentral über die beschriebenen Geräte bereitgestellt.

Stationen eines elektrischen Energieversorgungsnetzes sind für eine Lebensdauer von einigen Jahrzehnten ausgelegt, somit ist auch der Lebenszyklus der eingesetzten Automatisierungsgeräte vergleichsweise lang (ca. 15-20 Jahre). Die Funktionalität der fraglichen Geräte ist meistens für ihre gesamte Lebensdauer durch eine bei der Fertigung bzw. Inbetriebnahme initial eingespielte Gerätesoftware (Firmware) sowie eine eingestellte Konfiguration weitgehend fest vorgegeben.

Bei weltweit agierenden Herstellern wie der Anmelderin handelt es sich bei den Automatisierungsgeräten um Produkte, die für den Weltmarkt entwickelt worden sind. Etwaige regionale Anpassungen müssen hier pro Gerät über eine entsprechende Konfiguration innerhalb des in der Firmware definierten Leistungsumfangs vorgenommen werden. Eine signifikante Änderung der Funktionalität der in einer Station installierten Automatisierungsgeräte während ihrer Lebenszeit ist nur mit größerem Aufwand möglich und erfordert häufig den Austausch einer kompletten Firmware und teilweise sogar einen Gerätetausch. Hierzu ist im Regelfall auch eine zumindest zeitweise Abschaltung der der sich im Netz befindlichen Betriebsmittel nötig, was mit einer Betriebsunterbrechung des jeweiligen Netzabschnittes verbunden ist.

Herstellerseitig muss für die beschriebenen Stationen eines Energieversorgungsnetzes über die Lebenszeit der Automatisierungsgeräte eine Vielzahl unterschiedlicher Geräte und Geräteversionen mit einer großen Varianz vorgehalten werden, was zu hohen Kosten in der Gerätepflege und Lagerhaltung führt. Außerdem ist bei einer klassischen Verschaltung der Automatisierungsgeräte in den Stationen, insbesondere bei Freiluftschaltanlagen, ein erheblicher Verdrahtungsaufwand vonnöten, der in der Inbetriebsetzung und Pflege aufwendig und fehleranfällig ist. Auch ist eine Erweiterung der Stationen (z.B. bei der Ergänzung um ein neues Feld) mit großem Aufwand verbunden.

Elektrische Energieversorgungsnetze stellen außerdem vermehrt ein Ziel von Cyberangriffen dar. Um diesem zu begegnen, muss die Software der Automatisierungsgeräte regelmäßig aktualisiert werden, was mit einem hohen, meist manuelle Tätigkeiten erfordernden, Aufwand verbunden ist.

Schließlich ist auch ein Asset Management, also eine ganzheitliche kontinuierliche Bestandsaufnahme und Überwachung der Stationen inklusive einem übergreifenden Vergleich aller sich im Netz befindlichen Stationen, sowohl hinsichtlich der Primärtechnik als auch hinsichtlich der Sekundärtechnik, über den Lebenszyklus der Automatisierungsgeräte sehr aufwendig, da eine klassische Netzleitstelle nur einen sehr geringen Anteil der in der Station befindlichen Informationen zum Betrieb des elektrischen Netzes benötigt und damit viele Informationen lokal gehalten werden.

Es besteht damit ein Bestreben, den Betrieb eines elektrischen Energieversorgungsnetzes zu vereinfachen und den hinsichtlich der Automatisierungsgeräte zu betreibenden Aufwand zu reduzieren.

Eine Einrichtung der oben beschriebenen Art ist aus der WO 2004/030174A1 in Form eines Stationsleitrechners bekannt, der mit einer Trennersteuerung, einer Leistungsschaltersteuerung und eine Wandlerelektronik zusammenwirkt, um ein elektrisches Energieversorgungsnetz zu betreiben. Die bekannte Lösung vereinfacht den Betrieb des Energieversorgungsnetzes, indem mehrere Funktionen, die zuvor dezentral von mehreren Geräten ausgeführt wurden, in einem zentralen Stationsleitrechner zusammengefasst werden.

Ausgehend davon stellt sich der Fachmann die Aufgabe, den Betrieb eines Energieversorgungsnetzes noch zuverlässiger auszugestalten.

Diese Aufgabe wird erfindungsgemäß durch eine Einrichtung mit den Merkmalen des Patentanspruchs 1, ein System mit den Merkmalen des Patentanspruchs 6 sowie ein Verfahren mit den Merkmalen des Patentanspruchs 12 gelöst.

Konkret ist hinsichtlich der Einrichtung vorgesehen, dass diese dazu eingerichtet ist, zum Betreiben des elektrischen Energieversorgungsnetzes mit der Prozessoreinrichtung Programmanweisungen von Software-Applikationen auszuführen, die in der Datenspeichereinrichtung abgespeichert sind und bei deren Ausführung die Messwerte, die einen Betriebszustand des Energieversorgungsnetzes beschreiben, verarbeitet werden und die Steuersignale zur Beeinflussung der Aktoreinrichtungen erzeugt werden, wobei die Datenspeichereinrichtung datentechnisch voneinander separierte Speicherbereiche aufweist, die zur Abspeicherung der Software-Applikationen dienen, wobei in jedem Speicherbereich genau eine Software-Applikation abgespeichert werden kann, und wobei die Prozessoreinrichtung voneinander separierte und unabhängig voneinander arbeitende Prozessorbereiche aufweist, die zur Ausführung der Programmanweisungen eingerichtet sind, wobei in jedem Prozessorbereich Programmanweisungen genau einer der Software-Applikationen ausgeführt werden kann.

Ein wesentlicher Vorteil der erfindungsgemäßen Einrichtung besteht darin, dass die auf der Prozessoreinrichtung ablaufenden Software-Applikationen beeinflussungs- und rückwirkungsfrei ausgeführt werden können, also eine gegenseitige Beeinflussung der Software-Applikationen bei deren Ausführung ausgeschlossen ist. Dies wird durch streng voneinander separierte bzw. gekapselte Datenspeicherbereiche und Prozessorbereiche erreicht, so dass jede Software-Applikation in einer eigenen Umgebung verarbeitet werden kann, ohne dass hierdurch die in anderen Umgebungen ablaufenden weiteren Software-Applikationen beeinträchtigt werden können. Dies ist insbesondere im Umfeld der Automatisierung von Energieversorgungsnetzen wichtig, da hier ein besonderer Wert auf Zuverlässigkeit und Sicherheit des Betriebsablaufes gelegt wird.

Die verschiedenen Speicherbereiche können beispielsweise erreicht werden, indem verschiedene physikalische Speicher verwendet werden. Alternativ können auch auf einem einzelnen physikalische Speicher mehrere virtuelle Speicherbereiche erzeugt werden, die jeweils für eine der Software-Applikationen reserviert sind. Das Anlegen und Verwalten der Speicherbereiche erfolgt beispielsweise über ein Laufzeitsystem. Hierdurch wird eine Beeinflussung bei der Abspeicherung von Software-Applikationen vermieden und zudem erreicht, dass abgespeicherte Software-Applikationen verändert werden können, ohne dass hiervon andere Software-Applikationen beeinträchtigt werden. Die verschiedenen Prozessorbereiche können beispielsweise geschaffen werden, indem mehrere physikalische Prozessoren oder mehrere physikalische Kerne eines einzelnen Prozessors verwendet werden. Alternativ kann eine Trennung auch durch streng voneinander separierte Threads, d.h. Ausführungsstränge der jeweiligen Software-Applikationen, die in virtuellen geschützten bzw. gekapselten Bereichen ausgeführt werden. Es kann auch eine Kombination aus den oben genannten Maßnahmen zur Trennung der Speicher- bzw. Prozessorbereiche erfolgen. Durch die Trennung der Speicher- bzw. Prozessorbereiche wird eine Beeinflussung bei der Ausführung von Software-Applikationen vermieden. Vorzugsweise wird hierbei vorgesehen, dass ein Informationsaustausch zwischen einzelnen Software-Applikationen nicht direkt über die Grenzen der Speicher- bzw. Prozessorbereiche stattfindet, sondern vielmehr über den internen Datenbus ausgeführt wird. Hierdurch kann die strikte Trennung so aufrecht erhalten werden, dass keinerlei ungewollte Beeinflussung zwischen den einzelnen Software-Applikationen stattfindet.

Hinsichtlich der Speicherbereiche und/oder der Prozessorbereiche kann vorgesehen sein, dass diese statisch festgelegt sind oder dynamisch eingerichtet werden. Eine dynamische Festlegung kann sich beispielsweise an dem tatsächlich benötigten Speicherbedarf einer Software-Applikation und/oder dem benötigten Rechenaufwand zu ihrer Ausführung orientieren.

Bei den Software-Applikationen kann es sich beispielsweise um eine oder mehrere aus der folgenden, nicht abschließenden Liste handeln:
- Schutz-Applikationen, die unter Anwendung von Schutzalgorithmen (z.B. Distanzschutz, Überstromschutz, Überspannungsschutz, Unterspannungsschutz, Frequenzschutz, Differentialschutz, Sammelschienenschutz) anhand von Messwerten aus dem Energieversorgungsnetz eine Überwachung von Teilen des Energieversorgungsnetzes vornehmen;
- Fehlerortungs-Applikation, die anhand von Messwerten aus dem Energieversorgungsnetz eine Ortung eines vorliegenden Fehlers (z.B. auf einer Leitung) vornimmt;
- Anomalieerkennungs-Applikation, die anhand von Messwerten aus dem Energieversorgungsnetz oder auch bei der Datenübertragung auf internen oder externen Kommunikationsstrecken bestimmte Muster erkennt, die auf einen vorliegenden oder sich entwickelnden ungewollten Zustand des Netzes bzw. der Kommunikationsstrecke hindeuten;
- Bedienungs-Applikation (User Interface, Human Machine Interface), die es dem Betreiber des Energieversorgungsnetzes ermöglicht, eine Bedienoberfläche zur Beobachtung und zum Steuern der Komponenten des Energieversorgungsnetzes anzuzeigen;
- Automatisierungs-Applikation, die zeitlich oder durch ein Ereignis gesteuert automatisierte Bedienhandlungen bzgl. der Komponenten des Energieversorgungsnetzes vornimmt;
- Zustandsüberwachungs-Applikation (Condition-Monitoring), die es ermöglicht, den aktuellen Zustand des Energieversorgungsnetzes anhand von Messwerten zu bestimmen, hierzu gehört auch eine Alterungs- bzw. Abnutzungserkennung von Komponenten des Energieversorgungsnetzes;
- SDM-Applikation (Substation Data Management), die im Sinne eines Asset Managements eine Verwaltung der Geräte einer Schaltanlage ermöglicht und dabei beispielsweise eine Datenhaltung über auf einzelnen installierte Firmware sowie Hardware- und Software-Versionen durchführt;
- Sicherheits-Applikation, die es ermöglicht, Einstellungen für die Absicherung der Kommunikation zwischen den einzelnen Geräten vorzunehmen und zu verwalten (z.B. Zertifikatemanagement, kryptografisches Schlüsselmanagement);
- Simulations-Applikation, die es ermöglicht, Vorgänge im Energieversorgungsnetz und die Reaktion der Einrichtung darauf zu simulieren und zu testen (Digital Twin).

Gemäß einer vorteilhaften Ausführungsform der erfindungsgemäßen Einrichtung kann vorgesehen sein, dass in einem weiteren separierten Speicherbereich der Datenspeichereinrichtung ein Laufzeitsystem abgespeichert ist und mit einem weiteren separierten Prozessorbereich der Prozessoreinrichtung Programmanweisungen des Laufzeitsystems ausgeführt werden.

Auf diese Weise können die Software-Applikationen in ein Laufzeitsystem bzw. Betriebssystem eingebunden sein, das die grundlegenden Funktionen der Einrichtung steuert.

In diesem Zusammenhang wird es als vorteilhaft angesehen, wenn die Prozessoreinrichtung und die Datenspeichereinrichtung derart zusammenwirken, dass neue Software-Applikationen ohne Unterbrechung des Ablaufens der Programmanweisungen des Laufzeitsystems in einen der separierten Datenspeicherbereiche geladen und ihre Ausführung gestartet werden können und/oder bestehende Software-Applikationen ohne Unterbrechung des Ablaufens der Programmanweisungen des Laufzeitsystems gelöscht oder gegen eine neue Version derselben Software-Applikation ausgetauscht werden können.

Hierdurch kann erreicht werden, dass während des Betriebs (bzw. der Laufzeit) der Einrichtung vielfältige Änderungen an den Software-Applikationen vorgenommen werden können, ohne die Ausführung der anderen Applikationen zu beeinflussen. So können Software-Applikationen während der Laufzeit neu installiert, gelöscht oder einem Update unterzogen werden. Das Laufzeitsystem stellt hierbei quasi sicher, dass die Software-Applikationen durch deren "Kapselung" in eigenen Bereichen der Datenspeichereinrichtung und der Prozessoreinrichtung beeinflussungsfrei ausgeführt werden können.

Eine weitere vorteilhafte Ausführungsform der erfindungsgemäßen Einrichtung sieht vor, dass die Einrichtung dazu ausgebildet ist, über ihre Kommunikationseinrichtung mit einem Cloudcomputingsystem zusammenzuwirken.

Unter einem Cloudcomputingsystem soll hierbei eine Anordnung mit einer oder mehreren Datenspeichereinrichtungen und einer oder mehreren Datenverarbeitungseinrichtungen verstanden werden, die durch geeignete Programmierung zur Durchführung beliebiger Datenverarbeitungsprozesse ausgebildet werden kann. Die Datenverarbeitungseinrichtungen stellen hierbei in der Regel universelle Datenverarbeitungseinrichtungen (z.B. Server) dar, die hinsichtlich ihrer Konstruktion und ihrer Programmierung zunächst keinerlei spezifische Auslegung aufweisen. Erst durch eine vorgenommene Programmierung lässt sich die universelle Datenverarbeitungseinrichtung zur Ausführung spezifischer Funktionen ertüchtigen. Sofern das Cloudcomputingsystem mehrere einzelne Komponenten aufweist, sind diese auf geeignete Weise zur Datenkommunikation miteinander verbunden (z.B. durch ein Kommunikationsnetzwerk). Einem Cloudcomputingsystem können beliebige Daten zur Datenspeicherung und/oder -verarbeitung zugeführt werden. Das Cloudcomputingsystem selbst stellt die gespeicherten Daten und/oder die Ergebnisse der durchgeführten Datenverarbeitung wiederum anderen Geräten zur Verfügung. Ein Cloudcomputingsystem kann beispielsweise durch ein Rechenzentrum oder auch mehrere vernetzte Rechenzentren bereitgestellt werden. Üblicherweise ist ein Cloudcomputingsystem räumlich entfernt von der Einrichtung zum Betreiben des Energieversorgungsnetzes ausgebildet.

Das Cloudcomputingsystem kann dabei beispielsweise von demselben Betreiber wie die Einrichtung betrieben werden. Beispielsweise könnte es sich dabei um eine Serveranlage oder ein Rechenzentrum desselben Betreibers handeln. Es kann aber auch vorgesehen sein, dass das Cloudcomputingsystem einem anderen Betreiber als dem Betreiber der Einrichtung zugeordnet ist. Dies kann für den Betreiber der Einrichtung den Vorteil besitzen, dass er sich um den Betrieb und die Pflege des Cloudcomputingsystems nicht selbst kümmern muss, sondern diese Aufgaben dem Betreiber des Cloudcomputingsystems übertragen hat, die dieser als Dienstleistung anbietet. Der Betreiber des Cloudcomputingsystems bietet in diesem Fall dem Betreiber der Einrichtung bestimmte Services an, auf die dieser zugreifen kann. Ein Beispiel für ein Cloudcomputingsystem ist die Siemens Mindsphere ®.

Das Cloudcomputingsystem kann hierbei beispielsweise eine Verwaltung der Software-Applikationen auf der Einrichtung vornehmen. Dies kann beispielsweise darin bestehen, neue Software-Applikationen auf die Einrichtung zu übertragen, bestehende zu löschen oder zu aktualisieren. Außerdem kann das Cloudcomputingsystem beispielsweise Services bezüglich der Konfiguration der auf der Einrichtung ablaufenden Software-Applikationen zur Verfügung stellen.

Alternativ kann auch vorgesehen sein, dass die Einrichtung ein Teil eines Cloudcomputingsystems ist.

Bei dieser Ausführungsform wird die Einrichtung selbst durch das Cloudcomputingsystem gebildet, d.h. Cloudcomputingsystem weist die im Zusammenhang mit der Einrichtung beschriebenen Merkmale selbst auf.

Die oben genannte Aufgabe wird auch durch ein System zum Betrieb eines elektrischen Energieversorgungsnetzes gelöst. Das System weist hierbei eine Einrichtung nach einem der Ansprüche 1 bis 5 und ein Cloudcomputingsystem auf, das mit der Einrichtung verbunden ist und in dem eine Vielzahl von Software-Applikationen gespeichert ist, wobei das Cloudcomputingsystem dazu ausgebildet ist, ausgewählte Software-Applikationen an die Einrichtung zu übertragen und dort in einem der separierten Datenspeicherbereiche abzuspeichern.

Bei dieser Ausführungsform übernimmt das Cloudcomputingsystem Funktionen zur Verwaltung der Software-Applikationen auf der Einrichtung zum Betrieb des Energieversorgungsnetzes, so dass dem Betreiber der Einrichtung eine komfortable Möglichkeit geschaffen wird, Software-Applikationen auf die Einrichtung zu übertragen, ohne direkt manuelle Tätigkeiten an der Einrichtung vornehmen zu müssen.

Hinsichtlich des erfindungsgemäßen Systems gelten alle zu der erfindungsgemäßen Einrichtung voranstehend und nachfolgend gemachten Ausführungen und umgekehrt in entsprechender Weise, insbesondere ist die erfindungsgemäße Einrichtung zum Einsatz in dem erfindungsgemäßen System in jeder beliebigen Ausführungsform oder einer Kombination beliebiger Ausführungsformen geeignet. Auch hinsichtlich der Vorteile des erfindungsgemäßen Systems wird auf die zu der erfindungsgemäßen Einrichtung beschriebenen Vorteile verwiesen.

Im Zusammenhang mit dem System wird es als vorteilhaft angesehen, wenn das Cloudcomputingsystem dazu ausgebildet ist, einem Betreiber der Einrichtung über eine Anzeigeeinrichtung die Vielzahl von Software-Applikationen anzuzeigen und eine Bedienhandlung des Betreibers als Auswahl einer Software-Applikation zu erfassen, wobei als Reaktion auf die Auswahl der Software-Applikation diese auf die Einrichtung übertragen wird.

Bei dieser Ausführungsform wird durch das Cloudcomputingsystem gleichsam eine Plattform geschaffen, auf der dem Betreiber der Einrichtung verschiedene Software-Applikationen angeboten werden. Der Betreiber kann aus den Applikationen eine oder mehrere auswählen, die für den Betrieb des Energieversorgungsnetzes geeignet sind. Als Reaktion auf die Auswahl überträgt das Cloudcomputingsystem die fragliche Software-Applikation auf die Einrichtung. Dort wird sie in einem freien Speicherbereich abgespeichert und auf dem System der Einrichtung installiert, so dass sie nachfolgend ausgeführt werden kann.

Eine weitere vorteilhafte Ausführungsform des erfindungsgemäßen Systems sieht vor, dass das Cloudcomputingsystem dazu ausgebildet ist, eine Aktualisierungsanweisung von einem Betreiber der Einrichtung zu empfangen oder eine solche Aktualisierungsanweisung selbst zu erzeugen und als Reaktion auf die Aktualisierungsanweisung einzelne oder alle Software-Applikationen, die in dem Datenspeicher der Einrichtung gespeichert sind, zu aktualisieren oder zu löschen.

Auf diese Weise kann über das Cloudcomputingsystem eine Verwaltung der auf der Einrichtung gespeicherten Software-Applikationen durchgeführt werden. Dies kann beispielsweise ein Update-Management umfassen, bei dem das Cloudcomputingsystem überprüft, ob die auf der Einrichtung gespeicherten Software-Applikationen auf dem aktuellen Stand sind, und ggf. eine neuere Version einer Applikation auf die Einrichtung überträgt und dort installiert. Dies kann selbständig in einem "Auto-Update"-Modus erfolgen oder durch eine Bedienhandlug des Betreibers des Energieversorgungsnetzes oder eines Betreibers des Cloudcomputingsystems, der diesen Service durchführt, ausgelöst worden sein. Außerdem können auch bestehende Software-Applikationen, die nicht mehr benötigt werden, von der Einrichtung gelöscht werden, um Speicherplatz für andere Applikationen freizugeben.

Gemäß einer weiteren vorteilhaften Ausführungsform des erfindungsgemäßen Systems ist vorgesehen, dass das Cloudcomputingsystem dazu ausgebildet ist, eine Konfigurationsanweisung von einem Betreiber der Einrichtung zu empfangen oder eine solche Konfigurationsanweisung selbst zu erzeugen, und als Reaktion auf die Konfigurationsanweisung Parameter einzelner oder aller Software-Applikationen, die in dem Datenspeicher der Einrichtung gespeichert sind, einzustellen, wobei die Parameter den Ablauf der jeweiligen Software-Applikation beeinflussen.

Bei dieser Ausführungsform führt das Cloudcomputingsystem einen Konfigurationsdienst für die Einrichtung durch, um jeweils die geeigneten Parameter für die auf der Einrichtung gespeicherten Software-Applikationen bereitzustellen. Dabei kann das Cloudcomputingsystem beispielsweise durch den Betreiber der Einrichtung oder einen Betreiber des Cloudcomputingsystem eine Konfigurationsanweisung empfangen, die die gewünschten Parameter für einzelne oder mehrere Software-Applikationen enthält. Das Cloudcomputingsystem überträgt die Parameter dann an die Einrichtung. Dort werden sie genutzt, um die Konfiguration der betroffenen Software-Applikationen zu verändern. Die Konfigurationsanweisung kann aber auch automatisch vom Cloudcomputingsystem erzeugt werden. Dies kann beispielsweise zeitgesteuert erfolgen oder als Reaktion auf bestimmte Zustände des Energieversorgungsnetzes durchgeführt werden. So kann beispielsweise eine adaptive Konfiguration der Einrichtung vorgenommen werden, bei der die Parameter der einzelnen Software-Applikationen in Abhängigkeit vom Zustand des Energieversorgungsnetzes (z.B. seiner aktuellen Topologie oder des elektrischen Lastzustands) festgelegt werden.

Eine weitere vorteilhafte Ausführungsform des erfindungsgemäßen Systems sieht vor, dass das Cloudcomputingsystem dazu ausgebildet ist, einzelne oder alle auf der Einrichtung ablaufende Software-Applikationen selbst auszuführen und dabei zumindest eine Funktion der Einrichtung zu testen oder zu simulieren.

Auf diese Weise kann durch das Cloudcomputingsystem quasi ein digitaler Zwilling ("Digital Twin") der Einrichtung erzeugt werden. Ein solcher digitaler Zwilling ist eine softwaretechnische Nachbildung einer realen Anlage und ist dazu ausgebildet, in allen interessierenden Belangen in gleicher Weise wie die reale Anlage auf Eingangssignale zu reagieren. Wenn ein solcher digitaler Zwilling parallel zur Einrichtung mit denselben Eingangsinformationen (Messwerte, Zustandswerte etc.) beaufschlagt wird, erzeugt es dieselben Ausgangssignale (Steuersignale etc.) wie die Einrichtung. Dies kann dazu genutzt werden, um das voraussichtliche Verhalten der Einrichtung auf bestimmte Zustände des Energieversorgungsnetzes zu simulieren und dabei zu testen, ob die Einrichtung auf alle möglichen Zustände des Energieversorgungsnetzes in geeigneter Weise reagieren kann. Damit lassen sich z.B. Parameter von Schutz-Applikationen gegen ausgewählte Fehlerzustände testen, um ggf. eine geänderte Parametereinstellung zu veranlassen. Auch können Topologieänderungen und andere Veränderungen am Energieversorgungsnetz simuliert und getestet werden.

Schließlich ist gemäß einer weiteren vorteilhaften Ausführungsform des erfindungsgemäßen Systems vorgesehen, dass das System eine Mehrzahl von Messgeräten umfasst, die mit der Einrichtung verbunden sind und digitalisierte Messwerte, die den Betriebszustand des Energieversorgungsnetzes beschreiben, an die Einrichtung senden, und dass das System eine Mehrzahl von Aktoreinrichtungen umfasst, die mit der Einrichtung verbunden sind und digitale Steuersignale von der Einrichtung empfangen und in Steuerhandlungen hinsichtlich von Komponenten des Energieversorgungsnetzes umsetzen.

Auf diese Weise kann das System mit dem Energieversorgungsnetz interagieren, also den Zustand des Energieversorgungsnetzes anhand von Mess- und Zustandswerten erfassen und die Komponenten des Energieversorgungsnetzes anhand von Steuersignalen beeinflussen.

Die oben genannte Aufgabe wird schließlich auch durch ein Verfahren zum Betreiben eines elektrischen Energieversorgungsnetzes gelöst, bei dem mit einer Mehrzahl von Messgeräten digitalisierte Messwerte, die den Betriebszustand des Energieversorgungsnetzes beschreiben, gebildet und die Messwerte an eine mit den Messgeräten in Verbindung stehende Einrichtung gesendet werden, und mit der Einrichtung digitale Steuersignale gebildet und an eine Mehrzahl von Aktoreinrichtungen gesendet werden, mit den Aktoreinrichtungen die Steuersignale empfangen und in Steuerhandlungen hinsichtlich von Komponenten des Energieversorgungsnetzes umgesetzt werden.

Erfindungsgemäß ist vorgesehen, dass die Einrichtung gemäß einem der Ansprüche 1 bis 5 ausgebildet ist und im Betrieb des Energieversorgungsnetzes Software-Applikationen ausführt, wobei bei der Ausführung die Messwerte verarbeitet und die Steuersignale zur Beeinflussung der Aktoreinrichtungen erzeugt werden.

Hinsichtlich des erfindungsgemäßen Verfahrens gelten alle zu dem erfindungsgemäßen System und der erfindungsgemäßen Einrichtung voranstehend und nachfolgend gemachten Ausführungen und umgekehrt in entsprechender Weise, insbesondere sind die erfindungsgemäße Einrichtung bzw. das erfindungsgemäße System zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Verfahrens wird auf die zu dem erfindungsgemäßen System bzw. der erfindungsgemäßen Einrichtung beschriebenen Vorteile verwiesen.

Gemäß einer vorteilhaften Ausführungsform des erfindungsgemäßen Verfahrens wird vorgeschlagen, dass mit einem Cloudcomputingsystem, das mit der Einrichtung verbunden ist und in dem eine Vielzahl von Software-Applikationen gespeichert ist, einem Betreiber der Einrichtung über eine Anzeigeeinrichtung die Vielzahl von Software-Applikationen angezeigt wird,- eine Bedienhandlung des Betreibers als Auswahl einer Software-Applikation erfasst wird, als Reaktion auf die Auswahl der Software-Applikation diese auf die Einrichtung übertragen und dort in einem der separierten Datenspeicherbereiche abgespeichert wird.

Eine weitere vorteilhafte Ausführungsform des erfindungsgemäßen Verfahrens sieht vor, dass mit einem Cloudcomputingsystem eine Aktualisierungsanweisung von einem Betreiber der Einrichtung empfangen oder eine solche Aktualisierungsanweisung mit dem Cloudcomputingsystem selbst erzeugt wird und als Reaktion auf die Aktualisierungsanweisung einzelne oder alle Software-Applikationen, die in dem Datenspeicher der Einrichtung gespeichert sind, aktualisiert oder gelöscht werden.

Schließlich sieht eine weitere vorteilhafte Ausführungsform des erfindungsgemäßen Verfahrens vor, dass mit einem Cloudcomputingsystem eine Konfigurationsanweisung von einem Betreiber der Einrichtung empfangen oder eine solche Konfigurationsanweisung selbst erzeugt wird und als Reaktion auf die Konfigurationsanweisung Parameter einzelner oder aller Software-Applikationen, die in dem Datenspeicher der Einrichtung gespeichert sind, eingestellt werden, wobei die Parameter den Ablauf der jeweiligen Software-Applikation beeinflussen.

Zusammengefasst stellt die Erfindung damit eine Einrichtung und ein System zum Betreiben eines elektrischen Energieversorgungsnetzes sowie ein entsprechendes Verfahren zur Verfügung. Durch Installation einer - z.B. weitgehend standardisierten - Sensorik in der Nähe des Energieversorgungsnetzes werden alle für den Betrieb notwendigen Betriebsinformationen ("operational values") und ggf. zusätzliche nicht betriebsbedingten Informationen ("non-operational values") möglichst nah an den jeweiligen Betriebsmitteln erfasst und digitalisiert. Über eine entsprechende Kommunikation werden die digitalisierten Werte der z.B. als Zentraleinheit ausgebildeten Einrichtung, die bei Bedarf auch redundant ausgeführt sein kann, zur Verfügung gestellt. Die Einrichtung bietet architekturell die Möglichkeit, verschiedene Software-Applikationen jeweils in einem eigenen und isolierten Bereich der der Prozessoreinrichtung (z.B. CPU) und der Datenspeichereinrichtung sowie ggf. getrennten I/O Blöcken (Ein-/Ausgabeeinrichtungen) und Netzwerkeinrichtungen ablaufen zu lassen. Dadurch ist eine Unabhängigkeit vor gegenseitiger Beeinflussung der verschiedenen Software-Applikationen gewährleistet. Über diese Architektur können dann alle Funktionalitäten zum Betreiben eines elektrischen Energieversorgungsnetzes erfüllt werden und zentral ablaufen.

Die Applikationen werden dabei über eine vorzugweise cloudbasierte Einrichtung ("Cloudcomputingsystem") verwaltet und können bei Bedarf in die Einrichtung zur Laufzeit unterbrechungsfrei geladen werden.

Die Software-Applikationen sind hierbei so konzipiert, dass der Ablauf sowohl in der Einrichtung als auch in dem Cloudcomputingsystem möglich ist. Damit können auch zukünftige, bei der Inbetriebsetzung noch nicht vorhandenen, Funktionalitäten einfach nachgeladen werden.

Zu Test und Homologationszwecken können auf dem Cloudcomputingsystem die Software-Applikationen (z.B. neue Schutzfunktionalitäten, KI-Funktionen, digitaler Zwilling etc.) auch rückwirkungsfrei und parallel zu bereits aktiven (das Energieversorgungsnetz beeinflussenden) Software-Applikationen ablaufen. Durch offene Schnittstellen (APIs etc.) können auch Drittanbieter eigene Applikationen entwickeln und für das System anbieten, z.B. um verschiedene Schutzszenarien für adaptiven Schutz zu testen und einzusetzen.

Darüber hinaus kann ein Stationsmanagement z.B. Assetmanagement, an einer zentralen Stelle (in der Einrichtung oder im Cloudcomputingsystem) ablaufen. Mit Einwilligung des Betreibers des Energieversorgungsnetzes können die in einer Station generierten Daten von einem Betreiber des Cloudcomputingsystems in detaillierter Weise ausgewertet werden, um eine Auswertung über den Zustand des Energieversorgungsnetzes bzw. einer Station zu erzeugen.

Die Erfindung besitzt neben anderen die Vorteile einer deutlichen Reduzierung des Verkabelungsaufwandes (damit auch eine Kostenreduzierung) und eine Reduzierung der Komplexität, da die Anzahl der Geräte, Softwarestände, Schnittstellen etc. sinkt. Daneben kann eine einfache Anpassung der Funktionalität über den gesamten Lebenszyklus der Einrichtung stattfinden. Das beschriebene System ist damit adaptiv und zukunftssicher. Die Zuverlässigkeit der Einrichtung bzw. des Systems wird erhöht, indem ein rückwirkungsfreies testen und simulieren neuer Funktionalitäten, z.B. in einem digitalen Zwilling, stattfinden kann.

Insgesamt ist das System durch den vorgeschlagenen Aufbau, insbesondere das Zusammenwirken zwischen der Einrichtung und dem Cloudcomputingsystem einfach erweiterbar und es können in leichter Weise Aktualisierungen (Updates bzw. Patches) der Software-Applikationen, z.B. hinsichtlich der Security bzw. korrigierter Fehler an zentraler Stelle veranlasst und durchgeführt werden. Es findet eine kontinuierliche Überwachung der Station durch einfache Anbindung von Sensoren und zentraler Auswertung statt, was eine umfassende Analyse des Zustands des Energieversorgungsnetzes inklusive der Möglichkeit einer vorausschauenden Wartung ermöglicht. Die Einrichtung kann darüber hinaus einfach an regionale Anforderungen angepasst werden (z.B. Sprachanpassungen, regional geforderte Software-Applikationen). Zusätzlich besteht für Drittanbieter die Möglichkeit, eigene Software-Applikationen für das System anzubieten.

Dies wird erreicht, indem die im Stand der Technik ursprünglich dezentral auf verschiedene Geräte aufgeteilten Funktionen in der Einrichtung als Software-Applikationen zusammengefasst werden, wobei eine strikte Trennung der in der Einrichtung ablaufenden Software-Applikation vorliegt. Dazu werden alle notwendigen Informationen über das Energieversorgungsnetz unmittelbar in der Nähe der jeweiligen Messstelle digitalisiert und der Einrichtung als digitalisierte Messwerte zugeführt.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens, des Systems und der Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen
- Figur 1: eine schematische Ansicht eines ersten Ausführungsbeispiels eines Systems zum Betreiben eines elektrischen Energieversorgungsnetzes;
- Figur 2: eine schematische Ansicht des beispielhaften Aufbaus einer Einrichtung zum Betreiben eines elektrischen Energieversorgungsnetzes;
- Figur 3: eine schematische Ansicht eines zweiten Ausführungsbeispiels eines Systems zum Betreiben eines elektrischen Energieversorgungsnetzes;
- Figur 4: ein Ablaufschema zur Erläuterung der Vorgehensweise zur Verwaltung von SoftwareApplikationen durch ein Cloudcomputingsystem; und
- Figur 5: ein Ablaufschema zur Erläuterung der Vorgehensweise zur Konfigurierung von Software-Applikationen durch ein Cloudcomputingsystem.

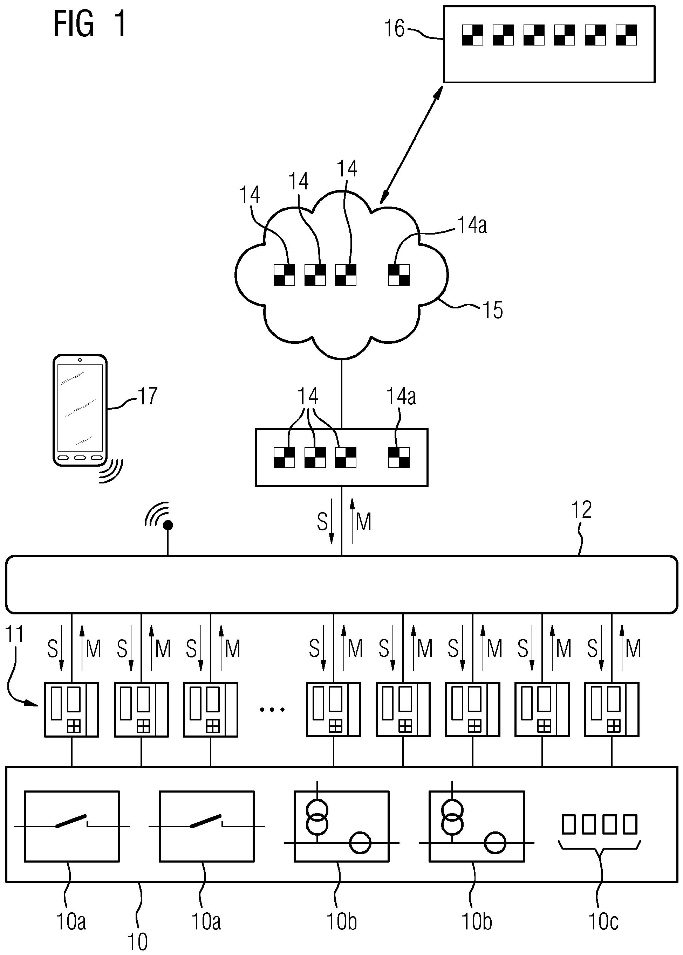

Figur 1 zeigt in schematischer Ansicht ein elektrisches Energieversorgungsnetz 10. Das Energieversorgungsnetz 10 kann hierbei übliche Komponenten wie Leitungen und Kabel, Sammelschienen, Ableiter, Transformatoren, Generatoren, Motoren, etc. aufweisen. Lediglich schematisch angedeutet sind Komponenten des Energieversorgungsnetzes 10 wie z.B. Schalter 10a und Sensoren 10b (z.B. Strom- und Spannungswandler). Darüber hinaus können weitere Geräte 10c vorhanden sein, die z.B. Temperatursensoren, Bewegungs- und Anwesenheitsmelder, Fehlerindikatoren, Lichtbogensensoren etc. umfassen können. Die Sensoren 10c und ggf. die weiteren Geräte sind an Feldgeräte (z.B. Messeinrichtungen bzw. Aktoren) 11 angeschlossen, wo ihre analogen Messsignale in digitalisierte Messwerte M umgesetzt werden.

Die digitalisierten Messwerte M werden von den Feldgeräten an ein Netzwerk, z.B. in Form eines Prozessbusses, 12 abgegeben und darüber einer Einrichtung 13 zum Betreiben des Energieversorgungsnetzes 10 zugeführt. Das Netzwerk kann z.B. als IEC 61850-fähiges Netzwerk oder als Internet of Things-Netzwerk ausgeführt sein. Die Einrichtung 13 verwendet die digitalisierten Messwerte zur Erkennung eines Zustands des elektrischen Energieversorgungsnetzes. Hierzu werden verschiedene Software-Applikationen 14 ausgeführt, bei denen es sich z.B. um Schutz-Applikationen, Automatisierungs-Applikationen, Fehlerortungs-Applikationen etc. handeln kann. Bei der Ausführung der Software-Applikationen 14 kann die Einrichtung 13 digitale Steuersignale S erzeugen, mit denen auf das Energieversorgungsnetz 10 eingewirkt werden soll. Hierzu werden die digitalen Steuersignale S an das Netzwerk 12 abgegeben und dem jeweiligen Feldgerät 11 zugeführt. Dort wird das digitale Steuersignal S in einen Steuerbefehl umgesetzt, der an eine Komponente des Energieversorgungsnetzes 10, beispielsweise einen Antrieb eines Schalters 10a übermittelt wird, um eine Steuerhandlung (z.B. öffnen, schließen) auszulösen. Andere ansteuerbare Komponenten können z.B. Trennschalter, Erdungsschalter, Netzfilter, steuerbare Lasten, Speicher oder Stufensteller sein, mit denen auf den Betriebszustand des Energieversorgungsnetzes Einfluss genommen werden kann.

In Figur 1 sind Feldgeräte 11 gezeigt, die sowohl die Messeinrichtungen als auch die Aktoreinrichtungen umfassen. Alternativ können jedoch getrennte Mess- und Aktoreinrichtungen vorgesehen sein.

Die Einrichtung 13 wirkt mit einem Cloudcomputingsystem 15 zusammen. Dieses dient beispielsweise zur Bereitstellung und zur Verwaltung der Software-Applikationen 14. Dazu kann das Cloudcomputingsystem beispielsweise einen Auswahlbereich 16 ("Appstore") umfassen, in dem einem Betreiber der Einrichtung 13 verschiedene Software-Applikationen 14 zur Auswahl angeboten werden. Dies kann beispielsweise auf einem stationären oder mobilen Anzeigegerät erfolgen. Beispielhaft sei angenommen, dass der Betreiber eine neue Software-Applikation 14a auswählen möchte. Auf eine Bedieneingabe des Betreibers, mit der er die Software-Applikation 14a auswählt, überträgt das Cloudcomputingsystem 15 die ausgewählte Software-Applikation 14a an die Einrichtung 13, wo sie installiert und zur Ausführung vorbereitet wird.

Das Cloudcomputingsystem 15 dient darüber hinaus auch zur Simulation und zum Test von Software-Applikationen. Dazu werden auf dem Cloudcomputingsystem 15 dieselben Software-Applikationen 14 wie auf der Einrichtung 13 ausgeführt und stellt damit einen digitalen Zwilling der Einrichtung 13 dar. Damit können auf dem Cloudcomputingsystem 15 die Software-Applikationen 14 rückwirkungsfrei, also ohne Beeinflussung der Einrichtung 13 oder des realen Energieversorgungsnetzes 10, testweise mit verschiedenen Eingangssignalen, z.B. einem einen Fehler angebenden Messsignal, beaufschlagt werden, um ihre Reaktion zu testen. Auch können unterschiedliche Parametereinstellungen der Konfiguration der verschiedenen Software-Applikationen 14 zunächst auf dem Cloudcomputingsystem getestet werden, bevor sie auf die Einrichtung 13 übertragen werden.

Darüber hinaus kann das Cloudcomputingsystem auch Funktionen zur Aktualisierung der auf der Einrichtung gespeicherten Software-Applikationen 14 ausführen. Hierzu vergleicht das Cloudcomputingsystem die Versionsnummer der auf der Einrichtung gespeicherten Software-Applikationen 14 mit der Versionsnummer der jeweils aktuellen Software-Applikation. Diese Information kann beispielsweise vom Hersteller der jeweiligen Software-Applikation zur Verfügung gestellt werden. Erkennt das Cloudcomputingsystem 15, dass eine neuere Version einer Software-Applikationen vorhanden ist, löst sie - selbständig oder auf Veranlassung des Betreibers der Einrichtung - eine Aktualisierung der fraglichen Software-Applikation auf der Einrichtung 13 aus.

Außerdem können durch das Cloudcomputingsystem 15 nicht mehr benötigte Software-Applikationen von der Einrichtung 13 gelöscht werden.

Der Betreiber der Einrichtung 13 kann über eine auf der Einrichtung ausgeführte Bedien-Applikation auf alle die Einrichtung und das Energieversorgungsnetz 10 betreffenden Informationen zugreifen. Dies kann über eine beliebige Bedieneinrichtung erfolgen. Beispielhaft ist in Figur 1 eine drahtlose Funkverbindung zu einem mobilen Bediengerät 17 (Tabletcomputer, Mobiltelefon etc.) angedeutet.

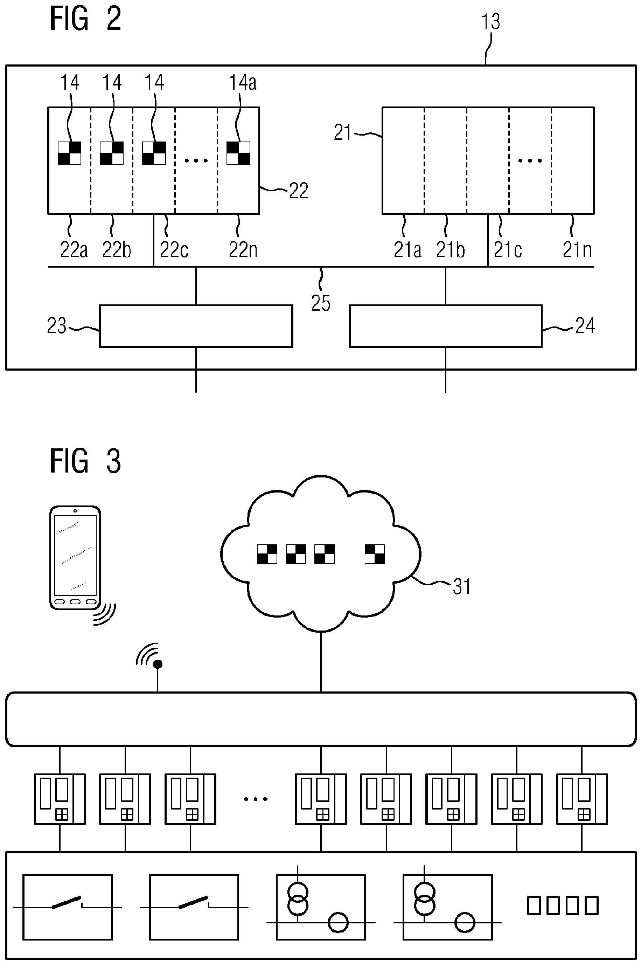

Figur 2 zeigt eine detailliertere Ansicht der Einrichtung 13. Die Einrichtung weist eine Prozessoreinrichtung 21, eine Datenspeichereinrichtung 22, eine Kommunikationseinrichtung 23 und optional eine zusätzliche Ein-/Ausgabeeinrichtung 24 auf. Die Prozessoreinrichtung 21, die Datenspeichereinrichtung 22, die Kommunikationseinrichtung 23 und die optionale Ein-/Ausgabeeinrichtung 24 sind über einen internen Datenbus 25 miteinander zum Datenaustausch verbunden. Über die Kommunikationseinrichtung 23 steht die Einrichtung 13 mit dem Netzwerk 12 in Verbindung. Hierbei kann es sich z.B. um eine Ethernet-Schnittstelle handeln. Über die Ein-/Ausgabeeinrichtung 24 können weitere Geräte an die Einrichtung 13 angeschlossen werden, z.B. um binäre Signale abzugeben (beispielsweise um Aktoren, die direkt an die Einrichtung 13 angeschlossen sind, anzusteuern).

Damit sich die Software-Applikationen 14 im Betrieb des Energieversorgungsnetzes 10 nicht gegenseitig beeinflussen und so die Zuverlässigkeit des Netzbetriebs beeinträchtigen könnten, ist die Datenspeichereinrichtung 22 in mehrere voneinander getrennte Speicherbereiche 22a-n unterteilt, wobei jeder Speicherbereich 22a-n maximal eine Software-Applikation 14 aufnimmt. Außerdem ist auch die Prozessoreinrichtung 21 in mehrere voneinander getrennte Prozessorbereiche 21a-n unterteilt, wobei jeder Prozessorbereich maximal eine Software-Applikation ausführt. Auf diese Weise wirken die Prozessoreinrichtung 21 und die Datenspeichereinrichtung 22 so zusammen, dass eine gegenseitige Beeinflussung bei der Ausführung der Software-Applikationen ausgeschlossen wird. Die Prozessoreinrichtung 21 kann hierfür beispielsweise ein geeignetes Laufzeitsystem ausführen, über das die getrennte Ausführung der Software-Applikationen ermöglicht wird. Hierdurch wird auch die Möglichkeit geschaffen, während der Laufzeit eine Software-Applikation, z.B. die Software-Applikation 14a, ohne Beeinflussung der anderen Software-Applikationen neu in die Datenspeichereinrichtung 22 zu laden und mit ihrer Ausführung zu beginnen. In entsprechender Weise können auch bestehende Software-Applikationen verändert oder gelöscht werden, ohne dass der Betrieb der Einrichtung 13 hierzu unterbrochen werden müsste.

Vorzugsweise erfolgt zwischen den einzelnen Speicherbereichen 22a-n und Prozessorbereichen 21a-n kein direkter Datenaustausch, z.B. um Variablen oder Prozesswerte zu übergeben. Vielmehr wird ein solcher Datenaustausch über den internen Datenbus durchgeführt, so dass Informationen von einem Prozessorbereich einer ersten Software-Applikation über den internen Datenbus an einen Speicherbereich einer zweiten Software-Applikation übermittelt werden. Die zweite Software-Applikation lädt sich die benötigten Informationen aus ihrem Speicherbereich in den zugehörigen Prozessorbereich. Auf diese Weise wird sichergestellt, dass nur definierte Wege zum Datenaustausch zwischen Software-Applikationen benutzt werden, die eine gegenseitige Beeinträchtigung vermeiden.

Figur 3 zeigt ein System zum Betrieb eines elektrischen Energieversorgungsnetzes, das sich von dem System der Figur 1 dadurch unterscheidet, dass die Einrichtung 13 (vgl. Figur 1) in das Cloudcomputingsystem 31 integriert ist. Damit führt das Cloudcomputingsystem quasi eine Doppelfunktion aus, nämlich zum einen die Funktionen der Einrichtung 13 und zum anderen die oben beschriebenen Funktionen des Cloudcomputingsystems 15. Hierzu kann das Cloudcomputingsystem 31 der Figur 3 getrennte Bereiche aufweisen, in denen die unterschiedlichen Funktionen ausgeführt werden. Alternativ können die Funktionen auch in einem gemeinsamen Bereich ausgeführt werden.

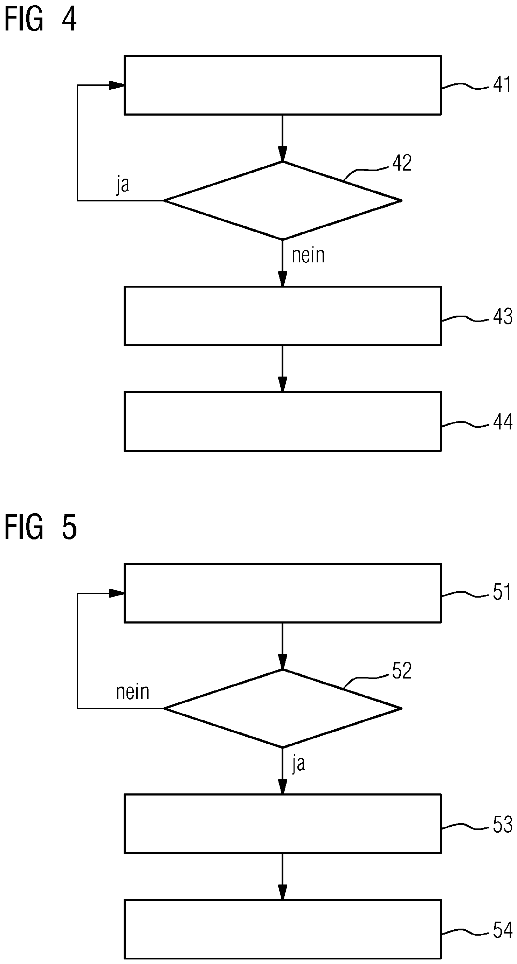

Figur 4 zeigt ein Ablaufschema zur Erläuterung der Vorgehensweise bei der Verwaltung der auf der Einrichtung 13 gespeicherten Software-Applikationen 14 durch das Cloudcomputingsystem 15. Speziell soll die Vorgehensweise bei der Aktualisierung von Softwareapplikationen erläutert werden. In einem ersten Schritt 41 vergleicht das Cloudcomputingsystem die Versionsnummern der auf der Einrichtung 13 gespeicherten Software-Applikationen 14 mit den für diese Software-Applikationen jeweils neusten Versionsnummern. Diese können beispielsweise von dem Hersteller der jeweiligen Software-Applikation zur Verfügung gestellt werden. Wird in einem zweiten Schritt 42 festgestellt, dass alle Software-Applikationen 14 auf dem aktuellen Stand sind, also alle Versionsnummern mit den jeweils neusten Versionsnummern übereinstimmen, so beginnt der Prozess erneut bei Schritt 41. Wird hingegen für mindestens eine Software-Applikation 14 festgestellt, dass eine neuere Version dieser Software-Applikation bereitsteht, erzeugt das Cloudcomputingsystem 15 in Schritt 43 eine Aktualisierungsanweisung, die die zu aktualisierende Software-Applikation und ggf. weitere Informationen wie die alte Versionsnummer und die neue Versionsnummer, den Speicherbereich, in dem die fragliche Software-Applikation auf der Einrichtung 13 gespeichert ist etc. umfasst. Schließlich wird in einem abschließenden Schritt 44 die aktuelle Version der fraglichen Software-Applikation auf die Einrichtung übertragen und dort installiert. Dies kann durch Übertragung der vollständigen Software-Applikation oder durch differentielle Übertragung nur der zu aktualisierenden Teile der Software-Applikation erfolgen. Auf der Einrichtung 13 wird die übertragene Software-Applikation in demjenigen Speicherbereich abgespeichert, in dem bereits die zu aktualisierende Software-Applikation gespeichert ist. Dabei wird die gespeicherte Software-Applikation zumindest teilweise überschrieben. Alternativ kann die neue Version der Software-Applikation auch in einen eigenen freien Speicherbereich geladen und dann installiert werden, so dass direkt auf die neue Version umgeschaltet werden kann. Die alte Version kann dann aus ihrem Speicherbereich gelöscht werden.

Schließlich zeigt Figur 5 ein Ablaufschema, mit dem erläutert wird, wie mittels des Cloudcomputingsystems 15 eine (Neu-) Konfigurierung einer Software-Applikation vorgenommen wird. Dabei werden Parameter als Einstellwerte für die zu konfigurierende Software-Applikation verändert, so dass zwar die Software-Applikation als solche unverändert bleibt, jedoch ihr Ablauf durch Setzen anderer Parameter verändert wird. In einem ersten Schritt 51 werden auf dem Cloudcomputingsystem die aktuellen Parameter der auf der Einrichtung 13 gespeicherten Software-Applikationen 14 bereitgestellt. Dies erfolgt entweder durch Abfrage der Software-Applikationen auf der Einrichtung 13 selbst oder durch Auslesen eines auf dem Cloudcomputingsystem gespeicherten Parameterarchivs, in dem die jeweils aktuellen Parameter abgelegt sind. Wird in einem zweiten Schritt 52 festgestellt, dass eine Software-Applikation mit veränderten Parametern versehen werden soll, wird der Prozess bei Schritt 53 fortgesetzt, andernfalls wird Schritt 51 wiederholt, bis eine Veränderung ansteht. Die Veränderung von Parametern kann beispielsweise durch eine Bedienhandlung eines Betreibers der Einrichtung manuell ausgelöst werden. Alternativ kann sie auch automatisch erfolgen, beispielsweise zeitlich oder durch ein Ereignis gesteuert. Ein solches Ereignis kann beispielsweise eine Veränderung der Topologie des Energieversorgungsnetzes sein. Wird für mindestens eine Software-Applikation 14 festgestellt, dass geänderte Parameter zu schreiben sind, erzeugt das Cloudcomputingsystem 15 in Schritt 53 eine Konfigurationsanweisung, die die zu neu zu parametrierende Software-Applikation und die zu verändernden Parameter inklusive der neu zu schreibenden Einstellwerte umfasst. Schließlich werden in einem abschließenden Schritt 54 die neu zu schreibenden Parameter auf die Einrichtung übertragen und dort bezüglich der fraglichen Software-Applikation geschrieben. Dies kann durch Übertragung eines vollständigen Parametersatzes oder durch differentielle Übertragung nur der zu aktualisierenden Teile des Parametersatzes erfolgen. Auf der Einrichtung 13 wird der übertragene Parametersatz dazu verwendet, Einstellwerte bei der betroffenen Software-Applikation zu verändern. Die Software-Applikation kann daraufhin sofort mit den neuen Parametern betrieben werden.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

## Patentansprüche

1. Einrichtung (13) zum Betreiben eines elektrischen Energieversorgungsnetzes (10) mit
- einer Prozessoreinrichtung (21);
- einer Datenspeichereinrichtung (22); und
- einer Kommunikationseinrichtung (23);
wobei
- die Prozessoreinrichtung (21), die Datenspeichereinrichtung (22) und die Kommunikationseinrichtung (23) untereinander über einen internen Datenbus (25) verbunden sind;
und wobei
- die Einrichtung (13) dazu ausgebildet ist, über die Kommunikationseinrichtung (23) digitalisierte Messwerte von Messeinrichtungen, die im Bereich des elektrischen Energieversorgungsnetzes (10) angeordnet sind, zu empfangen und digitale Steuersignale an Aktoreinrichtungen, die im Bereich des elektrischen Energieversorgungsnetzes (10) angeordnet sind, zu senden;
**dadurch gekennzeichnet, dass**
- die Einrichtung (13) dazu eingerichtet ist, zum Betreiben des elektrischen Energieversorgungsnetzes (10) mit der Prozessoreinrichtung (21) Programmanweisungen von Software-Applikationen (14) auszuführen, die in der Datenspeichereinrichtung (22) abgespeichert sind und bei deren Ausführung die Messwerte, die einen Betriebszustand des Energieversorgungsnetzes (10) beschreiben, verarbeitet werden und die Steuersignale zur Beeinflussung der Aktoreinrichtungen erzeugt werden; wobei
- die Datenspeichereinrichtung (22) datentechnisch voneinander separierte Speicherbereiche (22a-n) aufweist, die zur Abspeicherung der Software-Applikationen (14) dienen, wobei in jedem Speicherbereich (22a-n) genau eine Software-Applikation (14) abgespeichert werden kann; und wobei
- die Prozessoreinrichtung (21) voneinander separierte und unabhängig voneinander arbeitende Prozessorbereiche (21a-n) aufweist, die zur Ausführung der Programmanweisungen eingerichtet sind, wobei in jedem Prozessorbereich (21a-n) Programmanweisungen genau einer der Software-Applikationen (14) ausgeführt werden können.

2. Einrichtung (13) nach Anspruch 1,
**dadurch gekennzeichnet, dass**
- in einem weiteren separierten Speicherbereich (22a-n) der Datenspeichereinrichtung (22) ein Laufzeitsystem abgespeichert ist und mit einem weiteren separierten Prozessorbereich (21a-n) der Prozessoreinrichtung (21) Programmanweisungen des Laufzeitsystems ausgeführt werden.

3. Einrichtung (13) nach Anspruch 2,
**dadurch gekennzeichnet, dass**
- die Prozessoreinrichtung (21) und die Datenspeichereinrichtung (22) derart zusammenwirken, dass neue Software-Applikationen (14) ohne Unterbrechung des Ablaufens der Programmanweisungen des Laufzeitsystems in einen der separierten Datenspeicherbereiche (22a-n) geladen und ihre Ausführung gestartet werden können und/oder bestehende Software-Applikationen (14) ohne Unterbrechung des Ablaufens der Programmanweisungen des Laufzeitsystems gelöscht oder gegen eine neue Version derselben Software-Applikation (14) ausgetauscht werden können.

4. Einrichtung (13) nach einem der vorangehenden Ansprüche,
**dadurch gekennzeichnet, dass**
- die Einrichtung (13) dazu ausgebildet ist, über ihre Kommunikationseinrichtung (23) mit einem Cloudcomputingsystem (15) zusammenzuwirken.

5. Einrichtung (13) nach einem der Ansprüche 1 bis 3,
**dadurch gekennzeichnet, dass**
- die Einrichtung (13) ein Teil eines Cloudcomputingsystems (15) ist.

6. System zum Betreiben eines elektrischen Energieversorgungsnetzes (10) mit
- einer Einrichtung (13) nach einem der Ansprüche 1 bis 5;
- einem Cloudcomputingsystem (15), das mit der Einrichtung (13) verbunden ist und in dem eine Vielzahl von Software-Applikationen (14) gespeichert ist, wobei das Cloudcomputingsystem (15) dazu ausgebildet ist, ausgewählte Software-Applikationen (14) an die Einrichtung (13) zu übertragen und dort in einem der separierten Datenspeicherbereiche (22a-n) abzuspeichern.

7. System nach Anspruch 6,
**dadurch gekennzeichnet, dass**
- das Cloudcomputingsystem (15) dazu ausgebildet ist, einem Betreiber der Einrichtung (13) über eine Anzeigeeinrichtung die Vielzahl von Software-Applikationen (14) anzuzeigen und eine Bedienhandlung des Betreibers als Auswahl einer Software-Applikation (14) zu erfassen; wobei
- als Reaktion auf die Auswahl der Software-Applikation diese auf die Einrichtung (13) übertragen wird.

8. System nach Anspruch 6 oder 7,
**dadurch gekennzeichnet, dass**
- das Cloudcomputingsystem (15) dazu ausgebildet ist, eine Aktualisierungsanweisung von einem Betreiber der Einrichtung (13) zu empfangen oder eine solche Aktualisierungsanweisung selbst zu erzeugen; und
- als Reaktion auf die Aktualisierungsanweisung einzelne oder alle Software-Applikationen (14), die in der Datenspeichereinrichtung (22) der Einrichtung (13) gespeichert sind, zu aktualisieren oder zu löschen.

9. System nach einem der Ansprüche 6 bis 8,
**dadurch gekennzeichnet, dass**
- das Cloudcomputingsystem (15) dazu ausgebildet ist, eine Konfigurationsanweisung von einem Betreiber der Einrichtung (13) zu empfangen oder eine solche Konfigurationsanweisung selbst zu erzeugen; und
- als Reaktion auf die Konfigurationsanweisung Parameter einzelner oder aller Software-Applikationen (14), die in der Datenspeichereinrichtung (22) der Einrichtung (13) gespeichert sind, einzustellen, wobei die Parameter den Ablauf der jeweiligen Software-Applikation (14) beeinflussen.

10. System nach einem der Ansprüche 6 bis 9,
**dadurch gekennzeichnet, dass**
- das Cloudcomputingsystem (15) dazu ausgebildet ist, einzelne oder alle auf der Einrichtung (13) ablaufende Software-Applikationen (14) selbst auszuführen und dabei zumindest eine Funktion der Einrichtung (13) zu testen oder zu simulieren.

11. System nach einem der vorangehenden Ansprüche,
**dadurch gekennzeichnet, dass**
- das System eine Mehrzahl von Messeinrichtungen umfasst, die mit der Einrichtung verbunden sind und digitalisierte Messwerte, die den Betriebszustand des Energieversorgungsnetzes (10) beschreiben, an die Einrichtung (13) senden; und dass
- das System eine Mehrzahl von Aktoreinrichtungen umfasst, die mit der Einrichtung (13) verbunden sind und digitale Steuersignale von der Einrichtung (13) empfangen und in Steuerhandlungen hinsichtlich von Komponenten des Energieversorgungsnetzes (10) umsetzen.

12. Verfahren zum Betreiben eines elektrischen Energieversorgungsnetzes (10), bei dem
- mit einer Mehrzahl von Messeinrichtungen digitalisierte Messwerte, die den Betriebszustand des Energieversorgungsnetzes (10) beschreiben, gebildet und die Messwerte an eine mit den Messeinrichtungen in Verbindung stehende Einrichtung (13) gesendet werden; und
- mit der Einrichtung (13) digitale Steuersignale gebildet und an eine Mehrzahl von Aktoreinrichtungen gesendet werden;
- mit den Aktoreinrichtungen die Steuersignale empfangen und in Steuerhandlungen hinsichtlich von Komponenten des Energieversorgungsnetzes (10) umgesetzt werden;
**dadurch gekennzeichnet, dass**
- die Einrichtung (13) gemäß einem der Ansprüche 1 bis 5 ausgebildet ist und im Betrieb des Energieversorgungsnetzes (10) Software-Applikationen (14) ausführt, wobei bei der Ausführung die Messwerte verarbeitet und die Steuersignale zur Beeinflussung der Aktoreinrichtungen erzeugt werden.

13. Verfahren nach Anspruch 12,
**dadurch gekennzeichnet, dass**
- mit einem Cloudcomputingsystem (15), das mit der Einrichtung (13) verbunden ist und in dem eine Vielzahl von Software-Applikationen (14) gespeichert ist, einem Betreiber der Einrichtung (13) über eine Anzeigeeinrichtung die Vielzahl von Software-Applikationen (14) angezeigt wird;
- eine Bedienhandlung des Betreibers als Auswahl einer Software-Applikation (14) erfasst wird;
- als Reaktion auf die Auswahl der Software-Applikation (14) diese auf die Einrichtung (13) übertragen und dort in einem der separierten Datenspeicherbereiche (22a-n) abgespeichert wird.

14. Verfahren nach Anspruch 12 oder 13,
**dadurch gekennzeichnet, dass**
- mit einem Cloudcomputingsystem (15) eine Aktualisierungsanweisung von einem Betreiber der Einrichtung (13) empfangen oder eine solche Aktualisierungsanweisung mit dem Cloudcomputingsystem (15) selbst erzeugt wird und als Reaktion auf die Aktualisierungsanweisung einzelne oder alle Software-Applikationen (14), die in der Datenspeichereinrichtung (22) der Einrichtung (13) gespeichert sind, aktualisiert oder gelöscht werden.

15. Verfahren nach einem der Ansprüche 12 bis 14,
**dadurch gekennzeichnet, dass**
- mit einem Cloudcomputingsystem (15) eine Konfigurationsanweisung von einem Betreiber der Einrichtung (13) empfangen oder eine solche Konfigurationsanweisung selbst erzeugt wird und als Reaktion auf die Konfigurationsanweisung Parameter einzelner oder aller Software-Applikationen (14), die in der Datenspeichereinrichtung (22) der Einrichtung (13) gespeichert sind, eingestellt werden, wobei die Parameter den Ablauf der jeweiligen Software-Applikation (14) beeinflussen.
